# FASCICULE DE BREVET EUROPEEN

(11) **EP 0 898 520 B1**
(45) Date de publication et mention de la délivrance du brevet: **27.02.2002**
(21) Numéro de dépôt: 97921924.3
(22) Date de dépôt: 02.05.1997
(51) Int. Cl.: B60N 2/36, B60R 7/04, B60N 2/00, B60N 2/02

(54) **SUPPORT DE SIEGE CONFORME EN UN BAC DE RANGEMENT**
SITZUNTERGESTELL IN FORM EINES BEHÄLTERS
SEAT SUPPORT SHAPED AS A STORAGE BOX

(30) Priorité: 13.05.1996 FR 9605925
(43) Date de publication de la demande: 03.03.1999
(73) Titulaire: RENAULT, 92109 Boulogne-Billancourt (FR)
(72) Inventeur: URSET, Charles, F-95610 Eragny sur Oise (FR)
(86) Numéro de dépôt international: FR9700783
(87) Numéro de publication internationale: WO9743141

(56) Documents cités:
- EP-A- 0 615 879
- FR-A- 2 707 220
- US-A- 3 822 911
- US-A- 4 108 487
- US-A- 4 256 340
- US-A- 4 836 597
- US-A- 5 039 155
- US-A- 5 492 386

## Description

L'invention concerne un support de siège conformé en un bac de rangement, et plus particulièrement un support adapté à un siège enlevable et déplaçable longitudinalement, sur des rails, dans un véhicule automobile (cf. par exemple FR-A-2 707 220, correspondant au préambule de la revendication 1).

La publication US-A-5 039 155 décrit un siège enlevable comportant une structure support constituée d'un cadre qui porte latéralement des glissières disposées horizontalement et longitudinalement dans le véhicule, d'une tablette dans laquelle est aménagée des compartiments de rangement, des bacs de rangement dont la poulie supérieure est montée dans des glissières portées par le cadre.

Une telle réalisation est constituée d'un nombre important de pièces, ce qui augmente considérablement le poids et le coût.

La publication EP-A-0 615 879 représente un siège de véhicule automobile enlevable et déplaçable longitudinalement. Le siège est lié à des coulisseaux qui coopèrent avec des rails longitudinalement disposés dans le véhicule. Lorsqu'un siège est enlevé, aucun élément ne dépasse du plancher.

Les sièges sont réalisés de façon à obtenir une certaine hauteur d'assise, ce qui entraîne un poids important du support et un espace vide, non utilisé, sous le siège. L'importance du poids entraîne des manipulations difficiles du siège lors de son enlèvement du véhicule automobile.

L'utilisation de tels sièges n'autorise pas une zone de chargement complètement plane dans un véhicule automobile ne comportant pas un plancher, supportant lesdits sièges, dans le prolongement du plancher de charge.

La publication FR-A-2 707 220 mentionnée auparavant décrit un siège qui comporte un dossier et une assise montés à pivotement sur un support conformé en bac de rangement. L'assise du siège obture le bac de rangement.

Un tel siège n'autorise pas des agencements permettant de prolonger le plancher de charge du véhicule jusqu'aux sièges avant. L'augmentation de la capacité de chargement est réalisée par le rabattement du dossier sur l'assise, ce qui ne permet pas de faire une bonne continuité du plancher de charge et risque d'endommager le dossier.

Afin de remédier à ces inconvénients, l'invention a pour objet un support de siège permettant d'alléger la structure mobile d'un siège enlevable.

L'invention a également pour objet un support de siège conformé en un bac de rangement pouvant rester fixé aux rails de guidage, lorsque les sièges sont enlevés du véhicule.

L'invention a également pour objet un support de siège permettant d'augmenter la longueur plane du plancher de charge du véhicule jusqu'aux sièges avant.

L'invention a également pour objet des supports de siège pouvant être regroupés afin de modifier la position desdits sièges dans le véhicule.

Selon l'invention telle que définie dans la revendication indépendante, une paroi transversale avant et une paroi transversale arrière portent des moyens d'accrochage de moyens de verrouillage d'un siège enlevable et le fond, réunissant lesdites parois, comporte des coulisseaux qui coopèrent avec des rails longitudinalement disposés dans le véhicule.

Selon une autre caractéristique de l'invention, le support comporte quatre moyens d'accrochage principaux répartis symétriquement de part et d'autre de l'axe longitudinal médian du support de siège, et au moins deux moyens d'accrochage auxiliaires répartis sur les parois transversales avant et arrière.

Selon une autre caractéristique de l'invention, en place centrale d'une rangée de siège, le support comporte quatre moyens d'accrochage auxiliaire répartis de part et d'autre de l'axe longitudinal médian.

Selon une autre caractéristique de l'invention, deux moyens d'accrochage auxiliaires localisés sur un support d'extrémité, d'une rangée de trois sièges, et deux moyens d'accrochage auxiliaires réalisés sur le support central de la même rangée de siège, ont un entraxe E égal à l'écart transversal existant entre les moyens d'accrochage principaux des supports de ladite rangée de siège.

Selon une autre caractéristique de l'invention, le support central, d'une rangée de trois sièges, est de largeur inférieure aux supports localisés à l'extrémité de ladite rangée de siège, et qu'il comporte des moyens d'accrochage principaux ayant un écart transversal inférieur à ceux desdits supports d'extrémité.

Selon une autre caractéristique de l'invention, les moyens d'accrochage sont constitués par des axes transversaux localisés dans des encoches réalisées dans les parois transversales avant et arrière.

Selon une autre caractéristique de l'invention, le bac de rangement est obturé par un couvercle disposé entre l'ouverture dudit bac de rangement et le dessous de l'assise dudit siège et localisé sensiblement au niveau du plancher de charge.

Selon une autre caractéristique de l'invention, le couvercle est constitué d'un premier volet monté à pivotement autour d'un axe, porté par la paroi transversale avant, et d'un second volet monté à pivotement autour d'un axe, parallèle audit axe, porté par une extrémité libre dudit premier volet.

Selon une autre caractéristique de l'invention, le couvercle est constitué d'un premier et d'un second volets montés à pivotement autour d'un même axe transversal, porté par la paroi transversale arrière.

D'autres caractéristiques et avantages de l'invention apparaîtront à la lecture de la description d'exemples de réalisation d'un support de siège aux dessins annexés dans lesquels :
- la figure 1 représente une vue perspective de support de sièges selon l'invention,
- les figures 2 et 3 représentent une vue perspective de modularité des sièges sur les supports selon l'invention,

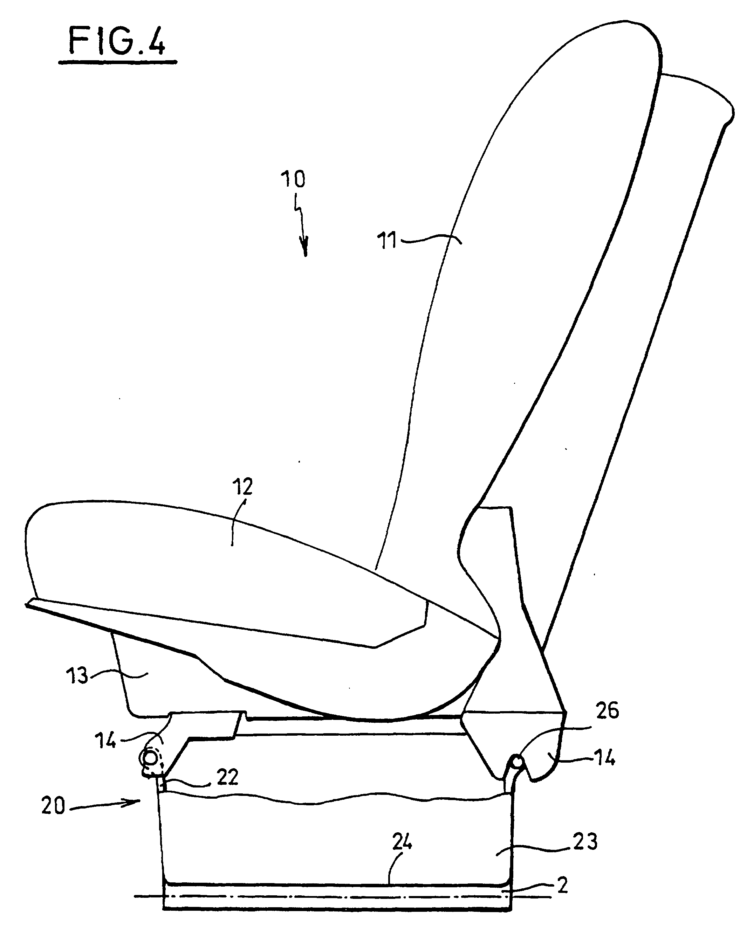

- la figure 4 représente une vue en élévation d'un siège fixé sur un support selon l'invention,
- la figure 5 représente une vue de dessus du couvercle du bac.
- la figure 6 représente une section du couvercle du bac.

Le siège 10 est constitué d'un dossier 11 et d'une assise 12 reliés à une structure porteuse 13. La structure porteuse 13 comporte quatre moyens de verrouillage 14 sur un support 20 fixé sur des coulisseaux 2 qui coopèrent avec des rails 3 parallèles longitudinalement disposés dans le véhicule 1. Les coulisseaux 2 peuvent être une partie du support 20. Des sièges 10 fixés sur les supports 20 respectif forment une rangée 6, constituée de trois sièges 10 dans notre exemple.

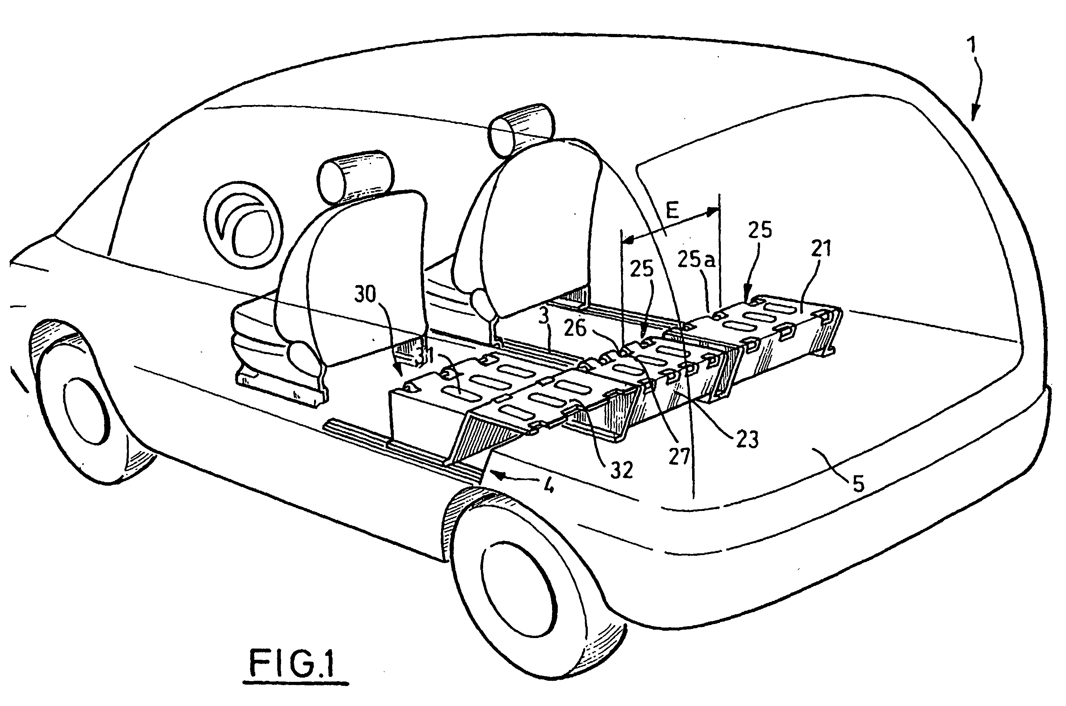

Tel que représenté à la figure 1, le support 20 est un bac de rangement délimité par deux parois latérales 21, une paroi transversale avant 22 et une paroi transversale arrière 23. Les quatre parois 21, 22, 23 sont réunies par un fond 24 qui est fixé aux coulisseaux 2 par des moyens connus.

Le support 20 comporte des moyens d'accrochage principaux 25, destinés à recevoir, les moyens de verrouillage 14 du siège 10. Les moyens d'accrochage principaux 25 sont formés par des axes transversaux 26 localisés dans des encoches 27 réalisées dans les parois transversales avant 22 et arrière 23.

Des moyens d'accrochage auxiliaires 25a, semblables aux moyens d'accrochage principaux 25 précédemment décrits, sont réalisés dans le support 20.

Le support 20 central situé au milieu de la rangée 6 comporte quatre moyens d'accrochage principaux 25 et quatre moyens d'accrochage auxiliaires 25a répartis de part et d'autre de l'axe médian longitudinal dudit support 20 central. Les supports 20 disposés aux extrémités de la rangées comportent quatre moyens d'accrochage principaux 25 et deux moyens d'accrochage auxiliaire 25a.

L'entraxe E entre les moyens d'accrochage auxiliaires 25a d'un support 20 extrême et ceux du support 20 central correspondent à l'entraxe des moyens d'accrochage principaux 25 d'un support 20. Les moyens d'accrochage auxiliaires 25a permettent alors de recevoir des sièges 10 latéraux l'un contre l'autre en position recentrée dans l'habitacle.

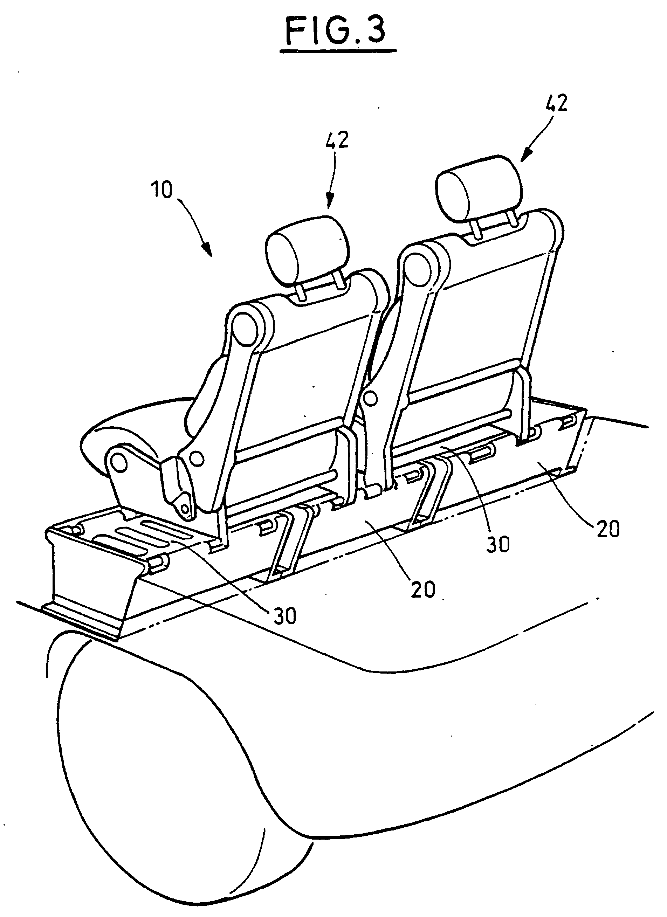

Dans le cas de l'utilisation de trois supports 20 alignés transversalement, chacun étant guidé dans des rails longitudinaux 3, les moyens d'accrochage auxiliaires 25a sont répartis sur les trois supports 20 de façon à pouvoir recentrer les sièges 10 disposés normalement sur les supports 20 extrêmes, tel que représenté à la figure 3. Les trois supports 20 ne sont alors plus indépendants.

Pour un véhicule 1 de moindre largeur, le support 20 central et le siège 10 fixés à celui-ci seront moins larges que les sièges 10 situés sur les côtés. La fonctionnalité permettant de recentrer les sièges 10 latéralement disposés, telle que décrite précédemment, reste cependant réalisable. L'entraxe, des moyens d'accrochage principaux 25 réalisés dans les supports 20 latéraux, est dans ce cas supérieur à l'entraxe des moyens d'accrochage principaux 25 localisés dans le support 20 central.

Tel que représenté aux figures 1, 5 et 6, les supports 20 de sièges 10 comportent un couvercle de fermeture 30. Le couvercle 30 est constitué de deux volets 31 et 32. Un premier volet 31 est monté à pivotement autour d'un axe 33, portés par la paroi transversale avant 22, par exemple. Un second volet 32 est monté à pivotement autour d'un axe 34, parallèle à l'axe 33, portés par une extrémité 31a libre du premier volet 31.

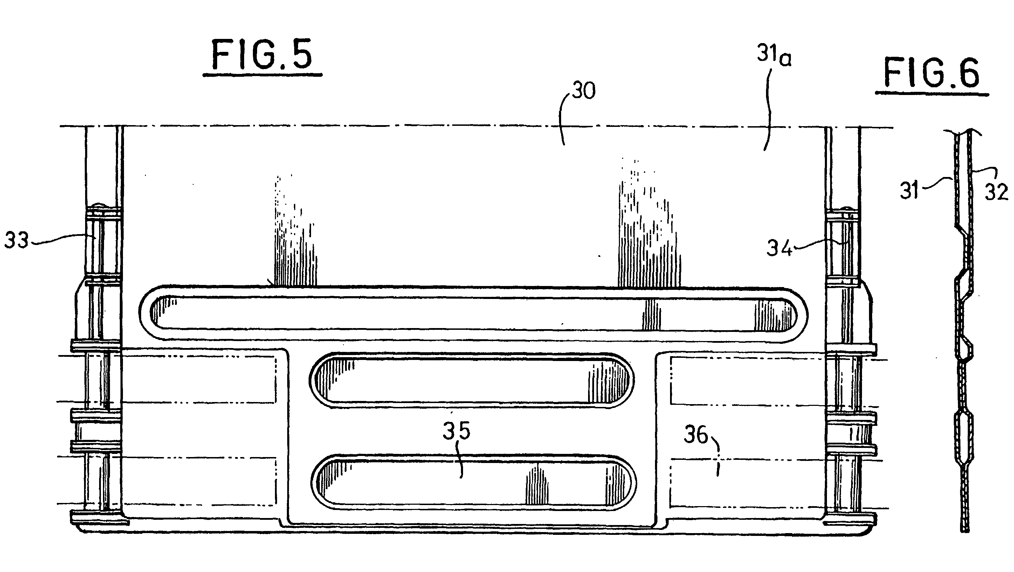

Tel que représenté à la figure 6, les premier et second volets 31 et 32 sont réalisés dans des plaques rigidifiées par des emboutis 35 longitudinaux. Les emboutis 35 des premiers et second volets 31 et 32 s'imbriquent les uns dans les autres dans la position superposée desdits volets 31 et 32.

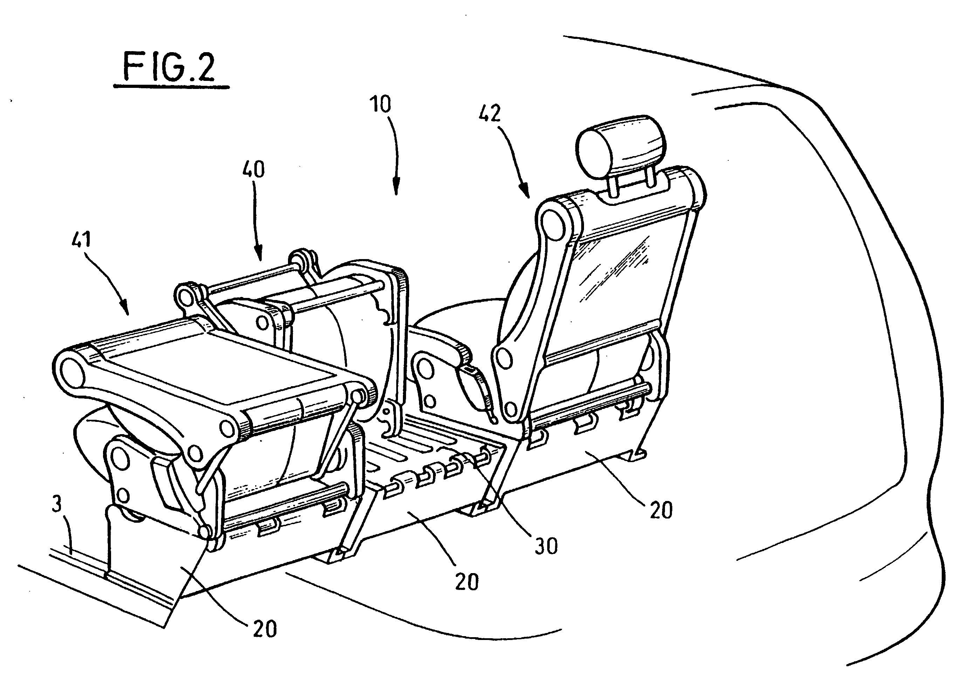

Tel que représenté à la figure 2, les sièges 10 peuvent avoir différentes fonctionnalités connues. En débloquant les moyens de verrouillage 14, correspondant aux moyens d'accrochage 25 ou 25a, situés sur la paroi transversale arrière 23, les sièges 10 peuvent être mis dans la position 40 dite "en portefeuille". Le siège 10 pivote alors autour des moyens d'accrochage 25 ou 25a, situés sur la paroi transversale avant 22. Le siège 10 pivotant sur "un élément surélevé, la dimension du dossier 11 du siège 10 (équipé d'un appui-tête par exemple) devient moins gênante contrairement aux sièges connus dont le support pivote directement sur le plancher.

Le couvercle 30 du support 20 est sensiblement à la même hauteur que le plancher de charge 5.

Lorsqu'un support 20 est déplacé sur ses rails 3, l'espace, formé entre la paroi transversale arrière 23, dudit support 20, et la délimitation verticale 4 du plancher de charge 5, est obturé par le déploiement du second volet 32 du couvercle 30, ce dernier venant en appui sur ledit plancher de charge 5.

Le siège 10, mis dans la position 40, permet l'ouverture du second volet 32 du couvercle 30. Il est possible, après déploiement du second couvercle 32, de remettre le siège 10 dans une des positions 41 ou 42, représenté à la figure 2.

Afin d'avoir accès à l'intérieur du support 20 conformé en bac de rangement, il suffit de faire pivoter le siège 10 autour des moyens d'accrochage 25 situés sur la paroi transversale avant 22 et de faire pivoter le premier volet 31 du couvercle 30 autour de son axe 33.

Des butées de charge (non représenté) peuvent être disposées verticalement au niveau de la paroi transversale avant 22 du support 20 de siège 10, afin de protéger, les personnes placées à l'avant du véhicule, contre tout déplacement du chargement lorsque les sièges 10 sont enlevés.

Afin de libérer la place occupée par les supports 20 de sièges 10, ces derniers peuvent être désolidarisés de leurs coulisseaux 2 respectifs.

Selon un autre mode de réalisation (non représenté), les premier et second volets du couvercle 31 et 32 peuvent être montés à pivotement autour d'un axe commun porté par la paroi transversale arrière 23. Il est alors possible d'accéder à l'intérieur du bac de rangement en basculant le siège 10 autour des moyens d'accrochage 25 réalisés dans la paroi transversale arrière 23 et de faire pivoter de la même façon les premier et second volets 31 et 32 du couvercle 30. Pour réaliser le prolongement du plancher de charge 5 le second volet est déployé en le faisant pivoter autour de l'axe commun porté par la paroi transversale arrière 23, lorsque le siège 10 est dans la position 40 décrite précédemment.

Des découpes 36 étant prévues dans le couvercle 30 à l'endroit des moyens d'accrochage 25 ou 25a, le siège 10 peut reprendre une position 41 ou 42, telle que représenté à la figure 2, lorsque le second volet 32 du couvercle 30 est déployé.

## Revendications

1. Support de siège conformé en un bac de rangement, formé par des parois transversales (22, 23), des parois latérales (21) et un fond (24), **caractérisé en ce qu'**une paroi transversale avant (22) et une paroi transversale arrière (23) portent des moyens d'accrochage (25) de moyens de verrouillage (14) d'un siège (10) enlevable et que ledit fond (24), réunissant lesdites parois (22, 23), comporte des coulisseaux (2) qui coopèrent avec des rails (3) longitudinalement disposés dans le véhicule (1).

2. Support de siège. selon la revendication 1, **caractérisé en ce qu'**il comporte quatre moyens d'accrochage principaux (25) répartis symétriquement de part et d'autre de l'axe longitudinal médian du support (20) de siège (10), et au moins deux moyens d'accrochage auxiliaires (25a) répartis sur les parois transversales avant (22) et arrière (23).

3. Support de siège selon la revendication 2, **caractérisé en ce qu'**en place centrale d'une rangée (6) de siège (10), le support (20) comporte quatre moyens d'accrochage auxiliaire (25a) répartis de part et d'autre de l'axe longitudinal médian.

4. Support de siège selon la revendication 2, **caractérisé en ce que** deux moyens d'accrochage auxiliaires (25a) localisés sur un support (20) d'extrémité, d'une rangée (6) de trois sièges (10), et deux moyens d'accrochage auxiliaires (25a) réalisés sur le support (20) central de la même rangée (6) de siège (10), ont un entraxe E égal à l'écart transversal existant entre les moyens d'accrochage principaux (25) des supports (20) de ladite rangée (6) de siège (10).

5. Support de siège selon la revendication 3, **caractérisé en ce que** le support (20) central, d'une rangée (6) de trois sièges (10), est de largeur inférieure aux supports (20) localisés à l'extrémité de ladite rangée (6) de siège (10), et qu'il comporte des moyens d'accrochage principaux (25) ayant un écart transversal inférieur à ceux desdits supports (20) d'extrémité.

6. Support de siège selon l'une quelconque des revendications 1 à 5, **caractérisé en ce que** les moyens d'accrochage (25, 25a) sont constitués par des axes transversaux (26) localisés dans des encoches (27) réalisées dans les parois transversales avant (22) et arrière (23).

7. Support de siège selon l'une quelconque des revendications 1 à 6, **caractérisé en ce que** le bac de rangement est obturé par un couvercle (30) disposé entre l'ouverture dudit bac de rangement et le dessous de l'assise (12) dudit siège (10) et localisé sensiblement au niveau du plancher de charge (5).

8. Support de siège selon la revendication 7, **caractérisé en ce que** le couvercle (30) est constitué d'un premier volet (31) monté à pivotement autour d'un axe (33), porté par la paroi transversale avant (22), et d'un second volet (32) monté à pivotement autour d'un axe (34), parallèle audit axe (33), porté par une extrémité libre (31a) dudit premier volet (31).

9. Support de siège selon la revendication 7, **caractérisé en ce que** le couvercle (30) est constitué d'un premier et d'un second volets (31, 32) montés à pivotement autour d'un même axe transversal, porté par la paroi transversale arrière (23).

## Patentansprüche

1. Als Ablagebehälter ausgebildeter Sitzträger, der durch Querwände (22, 23), Seitenwände (21) und einen Boden (24) gebildet wird, **dadurch gekennzeichnet, dass** eine vordere Querwand (22) und eine hintere Querwand (23) Aufhängemittel (25) für Verriegelungsmittel (14) eines abnehmbaren Sitzes aufweisen und dass der die Wände (22, 23) verbindende Boden (24) Gleitstücke (2) umfasst, die mit in Längsrichtung im Fahrzeug (1) angeordneten Schienen (3) zusammenwirken,

2. Sitzträger nach Anspruch 1, **dadurch gekennzeichnet, dass** er vier Hauptaufhängemittel (25), die symmetrisch zur Längsmittelachse des Trägers (20) des Sitzes (10) auf beide Seiten derselben aufgeteilt sind, und mindestens zwei Hilfsaufhängemittel (25a), die auf die vordere (22) und hintere (23) Querwand aufgeteilt sind, umfasst.

3. Sitzträger nach Anspruch 2, **dadurch gekennzeichnet, dass**, in der zentralen Lage einer Reihe (6) von Sitzen (10), der Träger (20) vier Hilfsaufhängemittel (25a) umfasst, die auf beide Seiten der Längsmittelachse aufgeteilt sind.

4. Sitzträger nach Anspruch 2, **dadurch gekennzeichnet, dass** zwei auf einem Endträger (20) einer Reihe (6) von drei Sitzen (10) befindliche Hilfsaufhängemittel (25a) und zwei auf dem mittleren Träger (20) derselben Reihe (6) von Sitzen (10) ausgebildete Hilfsaufhängemittel (25a) einen Achsenabstand E haben, der dem bestehenden transversalen Abstand zwischen den Hauptaufhängemitteln (25) der Träger (20) dieser Reihe (6) von Sitzen (10) entspricht.

5. Sitzträger nach Anspruch 3, **dadurch gekennzeichnet, dass** die Breite des mittleren Trägers (20) einer Reihe (6) von drei Sitzen (10) geringer ist als die der am Ende dieser Reihe (6) von Sitzen (10) befindlichen Träger (20) und dass er Hauptaufhängemittel (25) umfasst, deren transversaler Abstand geringer ist, als der der Endträger (20).

6. Sitzträger nach einem der Ansprüche 1 bis 5, **dadurch gekennzeichnet, dass** die Aufhängemittel (25, 25a) aus Querachsen (26) bestehen, die sich in Einkerbungen (27) befinden, welche in der vorderen (22) und in der hinteren (23) Querwand ausgebildet sind.

7. Sitzträger nach einem der Ansprüche 1 bis 6, **dadurch gekennzeichnet, dass** der Ablagebehälter durch einen Deckel (30) verschlossen wird, der zwischen der Öffnung dieses Ablagebehälters und der Unterseite des Sitzbereiches (12) des Sitzes (10) angeordnet ist und sich im wesentlichen auf der Höhe der Ladefläche (5) befindet.

8. Sitzträger nach Anspruch 7, **dadurch gekennzeichnet, dass** der Deckel (30) aus einem ersten Flügel (31), der schwenkbar um eine sich auf die vordere Querwand (22) abstützende Achse (33) gelagert ist, und aus einem zweiten Flügel (32), der schwenkbar um eine sich auf ein freies Ende (31a) des ersten Flügels (31) abstützende Achse (34) und parallel zu dieser Achse (33) gelagert ist.

9. Sitzträger nach Anspruch 7, **dadurch gekennzeichnet, dass** der Deckel (30) aus einem ersten und einem zweiten Flügel (31, 32) besteht, die um eine gleiche sich auf die hintere Querwand (23) abstützende Querachse drehbar gelagert sind.

## Claims

1. Seat support shaped as a storage tray formed by transverse walls (22, 23), lateral walls (21) and a base (24), **characterised in that** a front transverse wall (22) and a rear transverse wall (23) have latching means (25) for locking means (14) of a removable seat (10), and that said base (24) uniting said walls (22, 23) comprises sliders (2) that cooperate with rails (3) arranged longitudinally in the vehicle (1).

2. Seat support according to claim 1, **characterised in that** it comprises four main latching means (25) distributed symmetrically on either side of the longitudinal median axis of the support (20) for the seat (10), and at least two auxiliary latching means (25a) distributed on the front (22) and rear (23) transverse walls.

3. Seat support according to claim 2, **characterised in that** the central place of a row (6) of seats (10), the support (20) comprises four auxiliary latching means (25a) distributed on either side of the longitudinal median axis.

4. Seat support according to claim 2, **characterised in that** two auxiliary latching means (25a) located on an end support (20) of a row (6) of three seats (10), and two auxiliary latching means (25a) configured on the central support (20) of the same row (6) of seats (10) have a distance between centres E equal to the transverse distance apart between the main latching means (25) of the supports (20) of said row (6) of seats (10).

5. Seat support according to claim 3, **characterised in that** the central support (20) of a row (6) of three seats (10) is less wide than the supports (20) located at the end of said row (6) of seats (10), and that it comprises main latching means (25) at a transverse distance apart less than that of said end supports (20).

6. Seat support according to any one of claims 1 to 5, **characterised in that** the latching means (25, 25a) are constituted by transverse axles (26) located in notches (27) made in the front (22) and rear (23) transverse walls.

7. Seat support according to any one of claims 1 to 6, **characterised in that** the storage tray is covered by a cover (30) arranged between the opening of said storage tray and the bottom of the seat squab (12) of said seat (10) and located substantially at the level of the loading floor (5).

8. Seat support according to claim 7, **characterised in that** the cover (30) is constituted by a first flap (31) mounted in a pivoting manner about an axle (33) carried by the front (22) transverse wall, and of a second flap (32) mounted in a pivoting manner about an axle (34) parallel to said axle (33), carried by a free end (31a) of said first flap (31).

9. Seat support according to claim 7, **characterised in that** the cover (30) is constituted by a first and a second flap (31, 32) mounted in a pivoting manner about a common transverse axle carried by the rear transverse wall (23).
